# EUROPÄISCHE PATENTANMELDUNG

(11) **EP 1 912 010 A1**
(43) Veröffentlichungstag der Anmeldung: **16.04.2008**
(21) Anmeldenummer: 07118270.3
(22) Anmeldetag: 11.10.2007
(51) Int. Cl.: F16L 33/207

(54) **Fitting für ein Rohr**

(30) Priorität: 12.10.2006 DE 102006048287
(71) Anmelder: Uponor Innovation AB, 513 18 Fristad (SE)
(72) Erfinder: Kaufmann, Bernd, 97437, Hassfurt (DE); Kern, Thomas, 97289, Thüngen (DE)
(74) Vertreter: Hilleringmann, Jochen

(57) **Zusammenfassung**

Der Fitting für ein Rohr, insbesondere für ein an seiner Innenseite Kunststoff aufweisendes Rohr, ist versehen mit einem Fittingkörper (12), der eine Stützhülse (14) aufweist, auf die ein anzuschließendes Rohr aufschiebbar ist, einer Presshülse (16), die die Stützhülse (14) im wesentlichen konzentrisch und mit Abstand umgibt, und mindestens einem Halteelement (18) zum Halten der Presshülse (16) am Fittingkörper (12), wobei das Halteelement (18) in eine in Umfangsrichtung verlaufende Aufnahmenut (26) am Fittingkörper (12) eingreift. Die Presshülse (16) weist mindestens zwei Aufnahmeöffnungen (24) auf, die im am Fittingkörper (12) gehaltenen Zustand der Presshülse (16) in im wesentlichen der durch die Aufnahmenut (26) des Fittingkörpers definierten Radialebene angeordnet sind. Das Halteelement (18) weist zwei Schenkel (22) auf, die sich zum Halten der Presshülse (16) am Fittingkörper (12) durch die Aufnahmeöffnungen (24) der Presshülse (16) erstrecken und in die Aufnahmenut (26) eintauchen und zwar insbesondere in Umfangserstreckung der Aufnahmenut (26) des Fittingkörpers (12) und/oder tangential dazu durch im wesentlichen diametral gegenüberliegende Teilbereiche der Aufnahmenut (26) verlaufen.

## Beschreibung

Die Erfindung betrifft einen Fitting für ein Rohr und insbesondere für ein Rohr, das an seiner Innenseite Kunststoff aufweist, Ein solches Rohr kann beispielsweise eine Wandung aufweisen, die durchgehend aus Kunststoff besteht und ein- oder mehrlagig ausgebildet ist. Alternativ kann ein solches Rohr auch aus einem Kunststoff-/Metallverbundwerkstoff bestehen und somit eine Metalllage aufweisen.

Fittinge für Rohre mit Presshülsen sind in einer Vielzahl von Ausgestaltungen bekannt. Diese Fittinge weisen jeweils einen Fittingkörper auf, an dem eine Stützhülse ausgebildet ist, über die das Ende eines anzuschließenden Rohres aufschiebbar ist. Die Stützhülse kann an ihrer Außenseite profiliert sein. Ferner kann die Stützhülse einen oder mehrere Dichtungsringe umfassen, Zum Fitting gehört ferner eine Presshülse, die die Stützhülse mit Abstand und im wesentlichen konzentrisch umgibt, Durch radiales Verpressen der Presshülse, die bei angeschlossenem Rohr dessen Anschlussende umgibt, wird das Rohr an seinem Anschlussende dauerhaft gegen die Stützhülse gedrückt. Im Regelfall bestehen die Presshülsen aus plastisch verformbaren Material und insbesondere aus Metall.

Beispiele für Fittinge der vorstehend genannten Art befinden sich in DE 100 10 573 C1, DE 101 34 727 A1, DE 101 52 975 C1 und DE 102 33 559 B3. In diesen Schriften finden sich weitere Verweise auf andere Schriften, in denen ebenfalls Fittinge des vorstehend beschriebenen Typs beschrieben sind.

Für die Montage eines Rohres an den Fitting ist es von Vorteil, wenn die Presshülse konzentrisch zur Stützhülse und im Abstand zu dieser am Fitting positioniert ist. Dann braucht der Monteur lediglich noch das Anschlussende zwischen Presshülse und Stützhülse zu schieben, um alsdann die Radialverpressung vorzunehmen. Die Presshülse ist dabei entweder direkt an der Stützhülse oder dem Fittingkörper gehalten (siehe DE 100 10 573 C1 und DE 101 52 975 C1) oder aber der Fitting umfasst ein Halteelement zur Verbindung der Presshülse mit dem Fittingkörper bzw. der Stützhülse (siehe DE 101 34 727 A1 und DE 102 33 559 B3).

Bei den bekannten Fittingen mit vormontierter Presshülse ist der Aufwand für die Vormontage nicht unerheblich. Dies gilt insbesondere bei Fittingen für Rohre mit einem Durchmesser von größer 40 mm, da die Fittingkörper entsprechend dimensioniert sein müssen und damit auch die Halteelemente bzw. andere Ausbildungen am Fittingkörper einen entsprechend großen Materialeinsatz erfordern.

Aufgabe der Erfindung ist es, einen Fitting für ein Rohr und insbesondere für ein an seiner Innenseite Kunststoffmaterial aufweisendes Rohr zu schaffen, wobei der Fitting über einen vereinfachten Haltemechanismus für die Presshülse verfügt.

Zur Lösung dieser Aufgabe wird mit der Erfindung ein Fitting für ein Rohr, insbesondere für ein an seiner Innenseite Kunststoff aufweisendes Rohr vorgeschlagen, wobei der Fitting versehen ist mit
- einem Fittingkörper, der eine Stützhülse aufweist, auf die ein anzuschließendes Rohr aufschiebbar ist,
- einer Presshülse, die die Stützhülse im wesentlichen konzentrisch und mit Abstand umgibt, und
- mindestens einem Halteelement zum Halten der Presshülse am Fittingkörper,
- wobei das Halteelement in eine in Umfangsrichtung verlaufende Aufnahmenut am Fittingkörper eingreift.

Bei diesem Fitting ist erfindungsgemäß vorgesehen,
- dass die Presshülse mindestens zwei Aufnahmeöffnungen aufweist, die im am Fittingkörper gehaltenen Zustand der Presshülse in im wesentlichen der durch die Aufnahmenut des Fittingkörpers definierten Radialebene angeordnet sind, und
- dass das Halteelement zwei Schenkel aufweist, die sich zum Halten der Presshülse in die Aufnahmenut eintauchen, wobei insbesondere vorgesehen ist, dass sich die Schenkel am Fittingkörper durch die Aufnahmeöffnungen der Presshülse erstrecken und in Umfangserstreckung der Aufnahmenut des Fittingkörpers und/oder tangential dazu durch im wesentlichen diametral gegenüberliegende Teilbereiche der Aufnahmenut verlaufen,

Der erfindungsgemäße Fitting dient zum Anschluss eines Rohres, wie es eingangs der Beschreibung näher beschrieben ist. Der Fitting weist einen Fittingkörper mit einer Stützhülse und eine Presshülse auf, die mit Hilfe mindestens eines Halteelements am Fittingkörper bzw. an dessen Stützhülse fixiert ist. Dabei greift das Halteelement in eine Aufnahmenut am Fittingkörper ein, die sich um den Fittingkörper bzw. die Stützhülse in Umfangsrichtung erstreckt.

Erfindungsgemäß erstreckt sich das Halteelement in radialer, sekantieller oder einer anderen Richtung durch die Presshülse und durch einen Teil der Aufnahmenut des Fittingkörpers. Das Halteelement kann also radial einwärts gerichtet in die Aufnahmenut hineinragen oder erstreckt sich sekantiell oder zu einer hierzu parallelen oder winklig verlaufenden Richtung durch die Aufnahmenut oder einen Teil davon. Das Halteelement weist zwei Schenkel auf, die getrennt voneinander ausgebildet oder aber miteinander verbunden sind. Im einfachsten Fall handelt es sich bei den Schenkeln um im wesentlichen geradlinige Stifte, die durch jeweils eine Aufnahmeöffnung in der Presshülse bis in die Aufnahmenut hinein und radial, sekantiell oder tangential zur Aufnahmenut verlaufen. Es ist möglich, dass die Schenkel bzw. Stifte auf der den Öffnungen der Presshülse gegenüberliegenden Seite der Presshülsenwandung durch in diesem Bereich ausgebildete Öffnungen wieder aus der Presshülse herausragen. Dies ist aber nicht zwingend erforderlich.

Der Vorteil des erfindungsgemäßen Haltemechanismus für die Presshülse besteht darin, dass auch bei großen Nennweiten des Fittings an diesem keinerlei Vorsprungbunde ausgebildet werden müssen, um die Presshülse zu halten. Derartige Ausgestaltungen würden insbesondere bei großen Nennweiten eine nicht unbeträchtliche Materialmenge erfordern, was kostenintensiv ist. Zusätzlich entfällt nach der Erfindung die entsprechende Bearbeitung dieser Ausgestaltungen am Fitting zur Halterung der Presshülse. Erforderlich ist erfindungsgemäß lediglich, dass der Fittingkörper (beispielsweise im Bereich seiner Stützhülse oder außerhalb derselben) eine Aufnahmenut aufweist, die in Umfangsrichtung verläuft, Diese Aufnahmenut braucht sich nicht notwendigerweise über den gesamten Umfang erstrecken.

Es ist ausreichend, wenn der Fittingkörper lediglich in denjenigen Bereichen eine Aufnahmenut oder einen Aufnahmenutabschnitt aufweist, in denen die Schenkel des Halteelements verlaufen. Ferner ist von Vorteil, dass bei dem erfindungsgemäßen Konzept für mehrere unterschiedliche Nennweiten ein und dasselbe Halteelement Verwendung finden kann, sofern dieses federelastische Schenkel aufweist. Schließlich ist von Vorteil, dass die Montage zur Fixierung der Presshülse denkbar einfach ist, indem das Halteelement lediglich seitlich durch Aufnahmeöffnungen der Presshülse in diese und damit auf den Fitting aufgeschoben werden muss.

Wie bereits oben erwähnt, erstrecken sich die beiden Schenkel beidseitig des Fittingkörpers bzw. der Stützhülse in im wesentlichen diametral gegenüberliegenden Bereichen, in denen die Aufnahmenuten bzw. Abschnitte der Aufnahmenuten ausgebildet sind. Die beiden Aufnahmeöffnungen der Presshülse liegen somit vorzugsweise auf zwei zueinander parallelen Geraden, die ihrerseits im wesentlichen tangential zur Aufnahmenut des Fittingkörpers oder im wesentlichen parallel zu bezogen auf die Aufnahmenut des Fittingkörpers tangentialen Richtungen verlaufen.

Zweckmäßig ist es, wenn sich jeder Schenkel durch zwei Aufnahmeöffnungen der Presshülse erstreckt, Wie die beiden ersten Aufnahmeöffnungen so sind auch die beiden weiteren Aufnahmeöffnungen im wesentlichen in einer (gemeinsamen) Radialebene angeordnet, in der sich auch die Aufnahmenut bzw, die von den Schenkeln durchzogenen Abschnitte der Aufnahmenut des Fittingkörpers befinden. Die beiden Schenkel stützen sich also an zwei beabstandeten Stellen an der Presshülse ab (nämlich dort, wo sie die Aufnahmeöffnungen der Presshülse durchdringen); damit erhält die gesamte Fixierung und insbesondere die Anbringung des Halteelements an die Presshülse eine erhöhte Stabilität. Im Bereich zwischen den beiden Öffnungen kann jeder Schenkel mit Federkraft in die Aufnahmenut des Fittingkörpers eingetaucht sein, so dass er dort zuverlässig verbleibt, und zwar sowohl während des Transportweges als auch bei der Handhabung des Fittings vor Ort.

Zweckmäßigerweise sind die beiden Schenkel über einen Basisabschnitt des Halteelements verbunden. Damit bilden beide Schenkel ein einheitlich handhabbares Halteelement.

In vorteilhafter Weiterbildung der Erfindung ist ferner vorgesehen, dass die beiden Schenkel wellenförmig ausgebildet sind, wobei ihre Wellenverläufe zu einer sich in Durchmessererstreckung der Presshülse erstreckenden (Symmetrie-)Achse symmetrisch verlaufen und in ihren von der Aufnahmenut des Fittingkörpers an diametral gegenüberliegenden Umfangsabschnitten aufgenommenen Bereichen gekrümmt und vorzugsweise in Umfangsrichtung der Aufnahmenut gekrümmt sind. Das hier beschriebene Halteelement weist somit eine eine Haarnadel ähnelnde Gestalt auf,

Wie bereits oben dargelegt, braucht das Halteelement zur Ausübung seiner Haltefunktion nicht notwendigerweise von der Presshülse nach außen vorzustehen. Das Halteelement kann aber zum Zwecke der einfacheren Montage und aus anderen Gründen von der Presshülse nach außen abstehen. Damit ist nämlich die Möglichkeit gegeben, diesen Überstand als Anschlag und zur Führung beim Ansetzen eines Presswerkzeuges und beim Verpressen zu verwenden. Die Anschlag- und Führungsfunktion kann sowohl von den freien Enden der Schenkel als auch von dem die Schenkel bildenden Basisabschnitt des Halteelements ausgeübt werden. Für die Anschlag- und Führungsfunktion ist der Basisabschnitt geeigneter, da dieser durch entsprechende Formgebung als sich über im wesentlichen zwischen 90° und 180° oder einen anderen Winkelbereich kleiner als 180° um die Presshülse herum erstreckender Bereich ausgebildet werden kann. An dem Basisabschnitt kann ferner ein Führungselement angebracht sein, dass sich über den zuvor beschriebenen Winkelbereich um die Presshülse herum erstreckt. Während das Halteelement beispielsweise aus Metall besteht und insbesondere als speziell gebogener Metalldraht ausgebildet ist, kann das Führungselement Kunststoff aufweisen, der spritzgusstechnisch mit dem Halteelement zu einem Teil verbunden ist.

In weiterer vorteilhafter Ausgestaltung der Erfindung ist vorgesehen, dass an dem Basisabschnitt des Halteelements und/oder an dem Führungselement mindestens ein abscherbarer Vorsprung angeordnet ist, der durch das Presswerkzeug beim Verpressen der Presshülse von dem Halteelement bzw. dem Führungselement abscherbar ist. Hierdurch wird eine Verpresskennzeichnung realisiert, indem von außen anhand des Umstandes, dass der mindestens eine Vorsprung abgeschert ist, erkannt werden kann, dass der Pressfitting verpresst wurde. Der mindestens eine Vorsprung steht vom Halteelement oder vom Führungselement derart ab, dass er sich in dem zum Halteelement bzw. Führungselement benachbarten Bereich an der Presshülse befindet, innerhalb dessen das Presswerkzeug beim Verpressvorgang an der Presshülse anliegt.

Alternative Verpresskennzeichnungsmechanismen sind denkbar. Beispielsweise kann der Basisabschnitt des Halteelements und/oder das Führungselement mit einem lösbaren Verpresskennzeichnungselement verbunden sein, das durch das Presswerkzeug beim Verpressen der Presshülse von dem Basisabschnitt des Halteelements und/oder von dem Führungselement abtrennbar ist. Der Basisabschnitt, das Führungselement und das Verpresskennzeichnungselement können zusammen einen segmentierten Ring bilden, der sich über einen Umfangsabschnitt und insbesondere über den gesamten Umfang der Presshülse um diese herum erstreckt, wobei diese Elemente zunächst verbunden sind und diese Verbindung durch das Presswerkzeug beim Pressvorgang aufgetrennt wird. Somit fällt das Verpresskennzeichnungselement vom Basisabschnitt des Haltelements bzw. vom Führungselement ab, womit optisch angezeigt wird, dass eine Verpressung stattgefunden hat.

Die Erfindung wird nachfolgend anhand mehrerer Ausführungsbeispiele und unter Bezugnahme auf die Zeichnung näher erläutert. Im Einzelnen zeigen dabei:
- Fig. 1: eine perspektivische Ansicht eines Fittingkörpers mit über ein Federbügel-Halteelement am Fittingkörper gehaltener Presshülse,
- Fig. 2: eine perspektivische Ansicht der Presshülse mit Federbügel-Halteelement und ohne Fittingkörper,
- Fig. 3: den Fitting gemäß Fig. 1 in Explosionsdarstellung,
- Fig. 4: eine Ansicht des Fittings entsprechend Fig. 1 mit verändertem Design des Halteelements,
- Fig. 5: ein weiteres Ausführungsbeispiel eines Fittings mit gegenüber den Fign. 1 und 4 veränderter Gestalt des Halteelements,
- Fig. 6: eine weiteres Ausführungsbeispiel für das Haltelement mit Verpresskennzeichnung,
- Fig. 7: eine Ansicht in axialer Richtung auf die konzentrischen Press- und Stützhülsen eines über ein Federbügel-Halteelement für die Presshülse verfügenden Fittings mit alternativer Verpresskennzeichnung und
- Fig. 8: eine vergrößerte perspektivische Darstellung eines Teils des Ausführungsbeispiels eines Federbügel-Halteelements mit Verpresskennzeichnung gemäß Fig. 7.

In den Fign, 1 bis 3 ist ein erstes Ausführungsbeispiel eines Fittings 10 dargestellt. Der Fitting 10 weist einen Fittingkörper 12 auf, der mit einer Stützhülse 14 versehen ist. Neben dieser Stützhülse 14 kann der Fittingkörper 12 noch weitere Elemente aufweisen, wie beispielsweise eine weitere Stützhülse oder aber ein Gewinde sowie eine Werkzeugangriffseinrichtung zum Verschrauben des Fittings mittels eines Werkzeuges. Der für die Erfindung entscheidende Teil des Fittingkörpers 12 ist in den Figuren gezeigt, was im Zusammenhang mit der Beschreibung der Erfindung ausreichend ist.

Konzentrisch um die Stützhülse 14 herum ist eine Presshülse 16 angeordnet, die mit Hilfe eines Federbügel-Halteelements 18 an dem Fittingkörper 12 bzw. der Stützhülse 14 gehalten ist. Das Halteelement 18 besteht aus einem, wie in der Zeichnung wiedergegebenen gebogenen Federdraht und weist einen Mittel- oder Basisabschnitt 20 sowie zwei Schenkel 22 auf, Die Schenkel 22 sind durch Öffnungen 24 in der Presshülse 16 geführt und erstrecken sich innerhalb eines Teilbereichs im Inneren der Presshülse 16 durch eine Aufnahmenut 26, die im Fittingkörper 12 und in diesem Ausführungsbeispiel in der Stützhülse 14 des Fittingkörpers 12 als Umfangsnut ausgebildet ist. Die dem Basisabschnitt 20 abgewandten freien Enden 28 der Schenkel 22 sind durch zwei weitere Öffnungen 30 in der Presshülse 16 herausgeführt. In diesem Ausführungsbeispiel sind die Schenkel 22 wellenförmig ausgebildet, wobei sie in Umfangserstreckung der Stützhülse 14 gebogene Mittelabschnitte 32 aufweisen, innerhalb derer die Schenkel 22 in diametral gegenüberliegenden Abschnitten der Aufnahmenut 26 liegen. Wie zu erkennen ist, sind die beiden Paare von Aufnahmeöffnungen 24 und 30 der Presshülse 16 jeweils gegenüberliegend angeordnet, wobei die beiden durch jeweils eines der Aufnahmeöffnungen 24 und eines der Aufnahmeöffnungen 30 verlaufenden Geraden beidseitig der Stützhülse 14 verlaufen oder, anders ausgedrückt, die Stützhülse 14 im Bereich ihrer Aufnahmenut 26 zwischen den beiden Geraden angeordnet ist. Mit Hilfe des als Federbügel ausgebildeten Halteelements 18, das radial von außen durch die Aufnahmeöffnungen der Presshülse 16 und damit auf die Stützhülse 14 geschoben wird, lässt sich die Presshülse 16 an der Stützhülse 14 fixieren. Die Aufnahmeöffnungen 24 und 30 der Presshülse 16 befinden sich dabei im wesentlichen in der gleichen Radialebene, in der auch die Umfangs-Aufnahmenut 26 der Stützhülse 14 vertäuft. In ihren Bereichen zwischen der Presshülse 16 und der Stützhülse 14 wirken die Schenkel 22 zudem als Anschlag für ein in den Ringraum zwischen Presshülse 16 und Stützhülse 14 einschiebbares Ende eines anzuschließenden Rohres (nicht dargestellt).

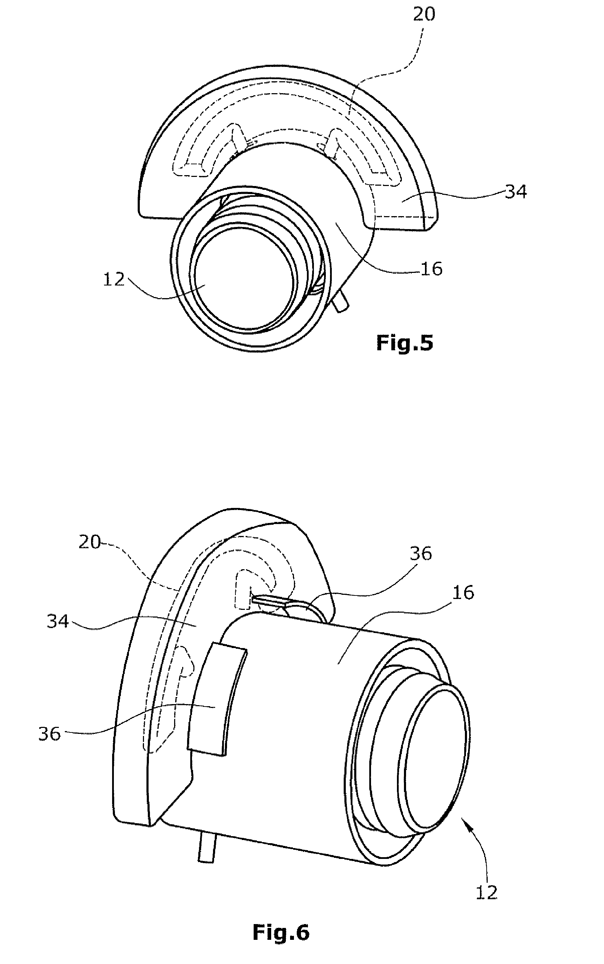

Eine weitere Funktion kommt dem Basisabschnitt 20 des Halteelements 18 zu. Dieser Basisabschnitt 20 steht radial von der Presshülse 16 ab und eignet sich daher neben dem Umstand, dass er bei der Montage der Presshülse 16 am Fittingkörper 12 als Handhabe dient, auch zur Führung und zur Ausrichtung eines Presswerkzeuges beim Ansetzen an die Presshülse 16. Diese Funktion kann durch eine Ausgestaltung des Basisabschnitts 20, wie sie beispielsweise in den Fign. 4 und 5 gezeigt ist, noch verbessert werden.

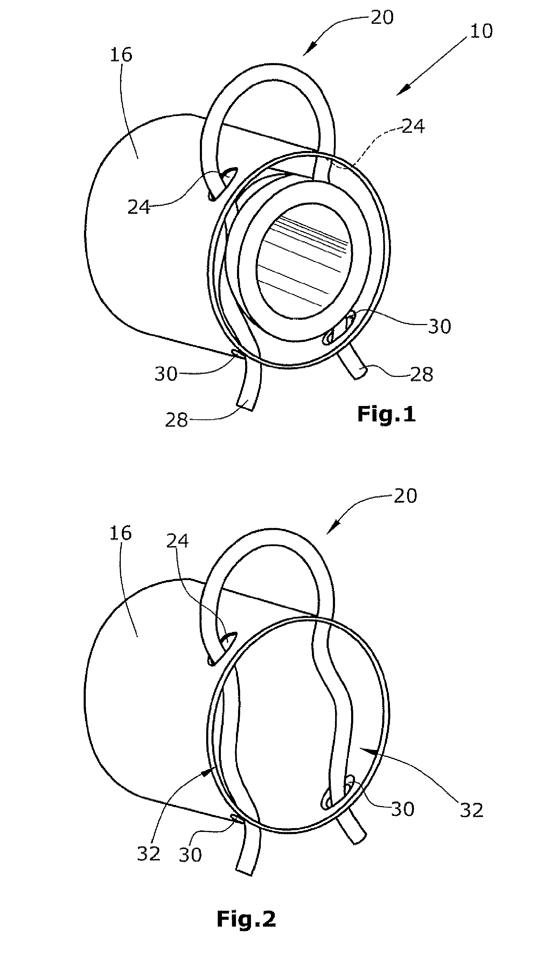

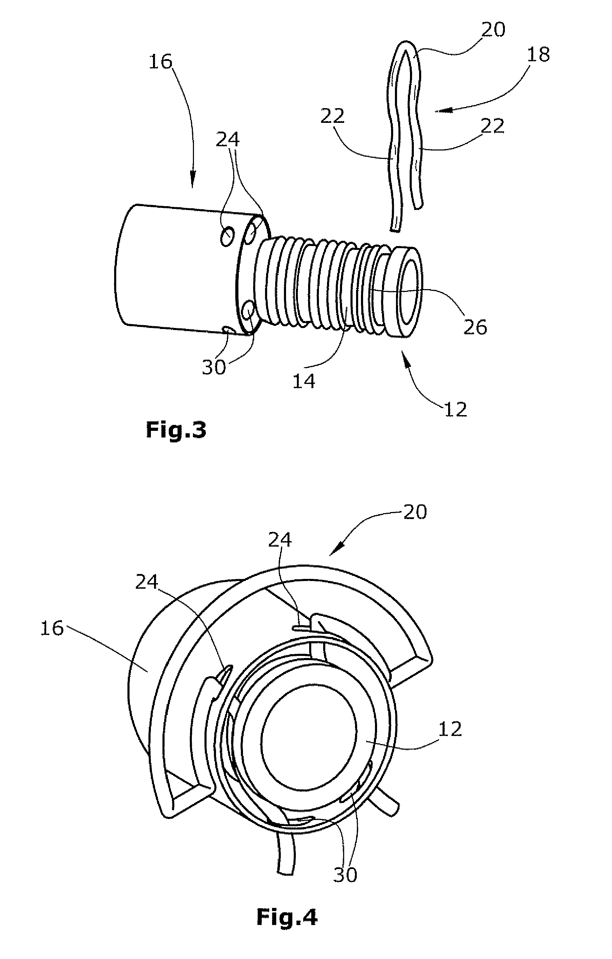

In den Fign. 4 und 5 sind zwei Varianten des Basisabschnitts 20 des Federbügel-Halteelements 18 nach den Fign. 1 bis 3 gezeigt. Soweit die in den Fign. 4 und 5 gezeigten Einzelteile der Fittinge denjenigen des Fittings 10 nach den Fign. 1 bis 3 entsprechen bzw. mit diesen gleich sind, sind sie mit den gleichen Bezugszeichen versehen.

Die alternative Ausgestaltung des Halteelements 18 gemäß den Fign. 4 und 5 gegenüber dem Haltelement 18 nach den Fign. 1 bis 3 betrifft die Ausbildung der Basisabschnitte 20. Wie anhand der Fign. 4 und 5 zu erkennen ist, ist der Basisabschnitt 20 um etwa 180° außen um die Presshülse 16 herum gezogen, was durch einen entsprechenden, in den Fign. 4 und 5 erkennbaren Verlauf des Drahtes realisiert ist, den das Federbügel-Halteelement 18 aufweist.

Fig. 5 zeigt darüber hinaus, dass dieser gebogene Basisabschnitt 20 von einem halbringförmigen Kunststoffelement, das als Führungs- und Anschlagelement 34 fungiert, umgeben ist. Während also die Führungs- und Anschlagsfunktion für das Presswerkzeug beim Ausführungsbeispiel gemäß Fig. 4 durch den Draht innerhalb des Basisabschnittes 20 realisiert wird, ist bei dem Ausführungsbeispiel gemäß Fig. 5 hierzu das Führungs- und Anschlagelement 34 vorgesehen.

Fig. 6 zeigt eine Weiterbildung des Führungs- und Anschlagelements 34 gemäß Fig. 5, indem an dieses Element 34 zwei Verpresskennzeichnungslaschen 36 angeformt sind, die ebenfalls aus Kunststoff bestehen können und im Radialabstand zur Presshülse angeordnet sind. Wenn nun beim Verpressen die Pressbacken des Presswerkzeuges von außen gegen die Presshülse 16 bewegt werden und gegen die Presshülse 16 drücken, scheren die Verpresskennzeichnungslaschen 36 vom Führungs- und Anschlagelement 34 ab, so dass sie nach der Verpressung nicht mehr vorhanden sind. Dies ist dann die optische Anzeige für eine durchgeführte Verpressung des Fittings 10.

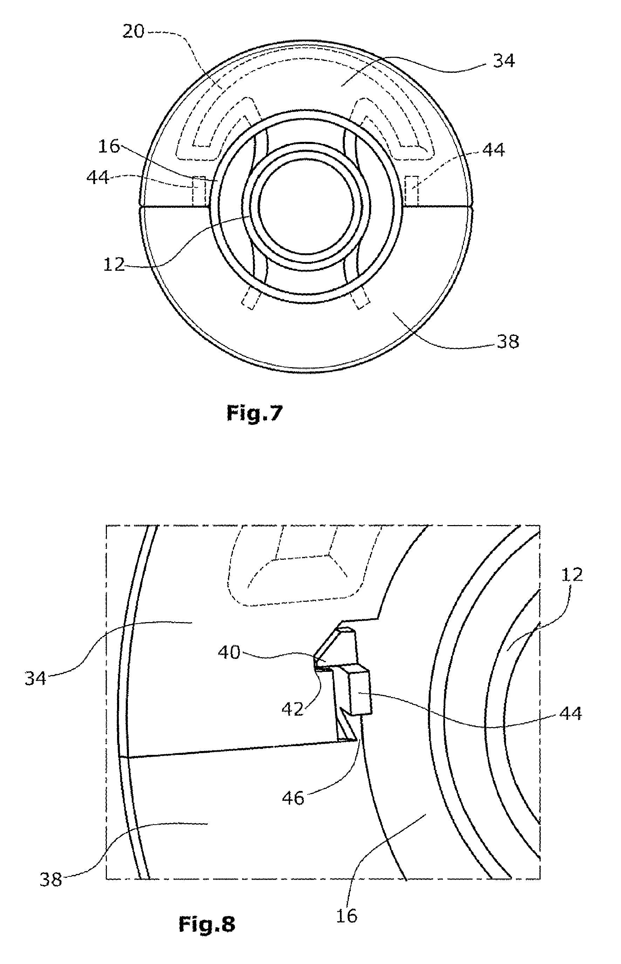

In den Fign. 7 und 8 ist ein letztes Ausführungsbeispiel der Erfindung gezeigt. Hier ist mit dem Führungs- und Anschlagelement 34 ein zweites halbkreisförmiges Element 38 verbunden, das ebenfalls der Verpresskennzeichnung dient. Dieses Verpresskennzeichnungselement 38 ist lösbar mit dem Führungs- und Anschlagelement 34 verbunden, was in diesem Ausführungsbeispiel durch Haken 40 realisiert ist. Die Haken 40 des Verpresskennzeichnungselements 38 greifen in Hinterschnitte 42 ein, die an der Innenseite des Führungs- und Anschlagelements 34 ausgebildet sind. Von den Haken 40 stehen Ansätze 44 ab, die diametral gegenüberliegend angeordnet sind und etwa in Höhe des Durchmessers der Presshülse 16 positioniert sind. Die Haken 40 sind über Sollbruchstellen 46 mit dem halbringförmigen Abschnitt des Verpresskennzeichnungselements 38 verbunden. Das Presswerkzeug wirkt auf die Ansätze 44 ein, wenn die Presshülse 16 verpresst wird, so dass die Haken 40 an ihren Sollbruchstellen 46 abscheren bzw. abbrechen und das Verpresskennzeichnungselement 38 vom Fitting abfällt, wodurch die optische Anzeige einer erfolgten Verpressung gegeben ist.

Die Vorteile der erfindungsgemäßen Hülsenbefestigung lassen sich wie folgt zusammenfassen:
- Realisierung einer Hülsenbefestigung, die keine zusätzlichen Anschläge oder Hülsenbefestigungskränze am Fittingkörper erforderlich macht. Derartige konstruktive Elemente erfordern insbesondere bei größeren Durchmessern eine nicht unerhebliche Materialmenge, die somit erfindungsgemäß eingespart werden kann. Daneben ist der Fittingkörper ohne die der Hülsenbefestigung dienenden Anschläge oder Kränze bzw. Bunde fertigungstechnisch einfacher herstellbar, da insbesondere außen am Fittingkörper keine Hinterschnitte erforderlich sind.
- Die Erfindung kann sowohl für Edelstahlhülsen als auch für Aluminiumhülsen sowie für fast alle Hülsen aus Metall bzw. Kunststoff verwendet werden. Das Fittingkörpermaterial ist unabhängig und kann insbesondere Metall oder Kunststoff (ggf. faserverstärkt) umfassen.
- Das Haltelement fungiert in seinen sich zwischen Presshülse und Stützhülse erstreckenden Bereichen als Rohranschlag, wenn dies gewünscht wird.
- Der radial von der Presshülse abragende Teil des Halteelements kann als Anschlag und Führung für ein Presswerkzeug dienen. In diesem Bereich kann das Haltelement mit "einfachem Kunststoff" umspritzt sein, der zur Kennzeichnung verschiedener Systeme bzw. Kunde unterschiedlich eingefärbt sein kann. Aber auch ohne den Kunststaffizusatz könnte beispielsweise durch verschiedene Farbgebung des Halteelements eine System- bzw. Kundenkennzeichnung vorgenommen werden.
- Die Standardpresswerkzeuge können weiterhin ohne Modifikation verwendet werden.
- Durch Erweiterung des Halteelements mit den Verpresskennzeichnungselementen entsteht ein multifunktionales Bauteil, das der Presshülsenhalterung, als Rohranschlag, der Führung des Presswerkzeuges und der Verpresskennzeichnung dienen kann.

## Patentansprüche

1. Fitting für ein Rohr, insbesondere für ein an seiner Innenseite Kunststoff aufweisendes Rohr, mit
- einem Fittingkörper (12), der eine Stützhülse (14) aufweist, auf die ein anzuschließendes Rohr aufschiebbar ist,
- einer Presshülse (16), die die Stützhülse (14) im wesentlichen konzentrisch und mit Abstand umgibt, und
- mindestens einem Halteelement (18) zum Halten der Presshülse (16) am Fittingkörper (12),
- wobei das Halteelement (18) in eine in Umfangsrichtung verlaufende Aufnahmenut (26) am Fittingkörper (12) eingreift,
**dadurch gekennzeichnet,**
- **dass** die Presshülse (16) mindestens zwei Aufnahmeöffnungen (24) aufweist, die im am Fittingkörper (12) gehaltenen Zustand der Presshülse (16) in im wesentlichen der durch die Aufnahmenut (26) des Fittingkörpers definierten Radialebene angeordnet sind, und
- **dass** das Halteelement (18) zwei Schenkel (22) aufweist, die sich zum Halten der Presshülse (16) am Fittingkörper (12) durch die Aufnahmeöffnungen (24) der Presshülse (16) erstrecken und in die Aufnahmenut (26) eintauchen.

2. Fitting nach Anspruch 1, **dadurch gekennzeichnet, dass** die beiden Schenkel (22) in Umfangserstreckung der Aufnahmenut (26) des Fittingkörpers (12) und/oder tangential dazu durch im wesentlichen diametral gegenüberliegende Teilbereiche der Aufnahmenut (26) verlaufen.

3. Fitting nach Anspruch 1 oder 2, **dadurch gekennzeichnet, dass** die beiden Aufnahmeöffnungen (24) der Presshülse (16) auf zwei zueinander parallelen Geraden angeordnet sind, die im wesentlichen tangential zur Aufnahmenut (26) des Fittingkörpers (12) oder im wesentlichen parallel zu bezogen auf die Aufnahmenut (26) des Fittingkörpers (12) tangentialen Richtungen verlaufen.

4. Fitting nach einem der Ansprüche 1 bis 3, **dadurch gekennzeichnet, dass** die Presshülse (16) zwei weitere Aufnahmeöffnungen (30) aufweist und dass sich jeder Schenkel (22) des Haltelements (18) durch zwei gegenüberliegende Aufnahmeöffnungen (24,30) erstreckt und in einem Bereich (32) zwischen diesen Aufnahmeöffnungen (24,30) durch die Aufnahmenut (26) des Fittingkörpers (12) verläuft.

5. Fitting nach einem der Ansprüche 1 bis 4, **dadurch gekennzeichnet, dass** das Halteelement (18) einen Basisabschnitt (20) aufweist, von dem aus sich die beiden Schenkel (22) erstrecken.

6. Fitting nach einem der Ansprüche 1 bis 5, **dadurch gekennzeichnet, dass** die beiden Schenkel (22) wellenförmig ausgebildet sind, wobei ihre Wellenverläufe zu einer sich in Durchmessererstreckung der Presshülse (16) erstreckenden Achse symmetrisch verlaufen und in ihren von der Aufnahmenut (26) des Fittingkörpers (12) an diametral gegenüberliegenden Umfangsabschnitten aufgenommenen Bereichen (32) im wesentlichen vorzugsweise in Umfangserstreckung der Aufnahmenut (26) gekrümmt sind.

7. Fitting nach einem der Ansprüche 1 bis 6, **dadurch gekennzeichnet, dass** die Aufnahmenut (26) des Fittingkörpers (12) in dessen Stützhülse (14) ausgebildet ist.

8. Fitting nach einem der Ansprüche 5 bis 7, **dadurch gekennzeichnet, dass** der Basisabschnitt (20) oder die freien Enden der Schenkel (22) des Halteelements (18) bei sich durch die Aufnahmeöffnungen (24) der Presshülse (16) sowie die Aufnahmenut (26) des Fittingkörpers (12) erstreckenden Schenkeln (22) von der Presshülse (16) absteht/abstehen und eine Führungsanlage für ein Presswerkzeug zum Verpressen der Presshülse (16) bildet/bilden.

9. Fitting nach einem der Ansprüche 5 bis 8, **dadurch gekennzeichnet, dass** der Basisabschnitt (20) des Halteelements (18) bei sich durch die Aufnahmeöffnungen (24) der Presshülse (16) sowie die Aufnahmenut (26) des Fittingkörpers (12) erstreckenden Schenkeln (22) von der Presshülse (16) absteht und dass an den Basisabschnitt (20) des Halteelements (18) ein Führungselement (34) zur Ausbildung einer Führungsanlage für ein Presswerkzeug angebracht ist.

10. Fitting nach Anspruch 8 oder 9, **dadurch gekennzeichnet, dass** der Basisabschnitt (20) des Halteelements (18) zur Erstreckung über im wesentlichen zwischen 90° und 180° um die Presshülse (16) herum ausgebildet ist und/oder dass das Führungselement (34) sich über im wesentlichen 90° und 180° um die Presshülse (16) herum erstreckt.

11. Fitting nach einem der Ansprüche 8 bis 10, **dadurch gekennzeichnet, dass** an dem Basisabschnitt (20) des Halteelements (18) und/oder an dem Führungselement (34) mindestens ein Vorsprung (36) angeordnet ist, der durch das Presswerkzeug beim Verpressen der Presshülse (16) abscherbar ist.

12. Fitting nach einem der Ansprüche 8 bis 11, **dadurch gekennzeichnet, dass** der Basisabschnitt (20) des Halteelements (18) und/oder das Führungselement (34) mit einem lösbaren Verpresskennzeichnungselement (38) verbunden ist/sind, das/die durch das Presswerkzeug beim Verpressen der Presshülse (16) von dem Basisabschnitt (20) des Halteelements (18) und/oder dem Führungselement (34) abtrennbar ist/sind.
